(19) Europäisches Patentamt
European Patent Office
Office européen des brevets

(11) **EP 3 610 563 B1**

(12) **EUROPÄISCHE PATENTSCHRIFT**

(45) Veröffentlichungstag und Bekanntmachung des Hinweises auf die Patenterteilung:
**28.07.2021 Patentblatt 2021/30**

(21) Anmeldenummer: **18716237.5**

(22) Anmeldetag: **05.04.2018**

(51) Int Cl.:
*F03D 7/02* (2006.01)    *F03D 15/20* (2016.01)
*F03D 80/60* (2016.01)    *H02K 1/18* (2006.01)
*H02K 7/18* (2006.01)    *H02K 9/04* (2006.01)
*H02K 9/19* (2006.01)

(86) Internationale Anmeldenummer:
**PCT/EP2018/058719**

(87) Internationale Veröffentlichungsnummer:
**WO 2018/189023 (18.10.2018 Gazette 2018/42)**

(54) **VERFAHREN ZUM KÜHLEN EINER GETRIEBELOSEN WINDENERGIEANLAGE**

METHOD FOR COOLING A GEARLESS WIND TURBINE

PROCÉDÉ SERVANT À REFROIDIR UNE ÉOLIENNE SANS TRANSMISSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.04.2017 DE 102017107897**

(43) Veröffentlichungstag der Anmeldung:
**19.02.2020 Patentblatt 2020/08**

(73) Patentinhaber: **Wobben Properties GmbH**
**26607 Aurich (DE)**

(72) Erfinder:
• **SCHAPER, Ulf**
**27254 Staffhorst (DE)**
• **ENSKONATUS, Kai**
**26759 Hinte (DE)**
• **GIENGIEL, Wojciech**
**26607 Aurich (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
EP-A1- 2 852 037    EP-A2- 1 237 263
EP-A2- 2 372 881    WO-A1-02/086313
US-A1- 2015 265 987

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Steuern einer getriebelosen Windenergieanlage. Die vorliegende Erfindung betrifft auch eine Windenergieanlage.

Windenergieanlagen sind bekannt und sie wandeln kinetische Energie aus Wind in elektrische Energie. Dazu verwenden sie einen Generator. Im Falle eines getriebelosen Generators weist dieser einen Läufer auf, der direkt mit einem aerodynamischen Rotor der Windenergieanlage gekoppelt ist. Dieser Läufer dreht sich damit so langsam, wie sich der aerodynamische Rotor der Windenergieanlage dreht. Dadurch bedingt ist eine solche getriebelose Windenergieanlage regelmäßig sehr hochpolig und weist einen großen Luftspaltdurchmesser auf, der mehrere Meter betragen kann und bei der derzeit größten getriebelosen Windenergieanlage, der E-126, sogar im Bereich vom 10 Metern liegt, also im Bereich von 30 Fuß.

Gleichzeitig sollte ein solcher Luftspalt aber auch eine möglichst geringe Dicke aufweisen, die selbst bei den genannten großen Luftspaltdurchmessern bei nur wenigen Millimetern liegen. Kommt der Läufer im Betrieb, also während seiner Drehung, dem Stator zu nahe, wird der Luftspalt also an einer Stelle zu klein, besteht die Gefahr einer Havarie. Um das zu verhindern, kann die Luftspaltdicke überwacht werden. Wird die Luftspaltdicke in einem Bereich als zu klein erfasst, können Schutzmaßnahmen ergriffen werden, wie das Reduzieren der Leistung des Generators oder notfalls auch das Anhalten der Windenergieanlage.

Dabei kann bei getriebelosen Windenergieanlagen eine Veränderung der Luftspaltdicke auch durch eine thermische Ausdehnung des inneren Teils des Generators entstehen, also bspw. durch eine Ausdehnung des Läufers, wenn der Generator ein Innenläufer ist. Eine Abnahme der Dicke des Luftspalts muss somit nicht unbedingt auf einen Defekt des Generators hindeuten.

Aber auch im Falle einer solchen thermischen Ausdehnung des Innenteils würde ein die Luftspaltdicke überwachender Sensor ansprechen und die Schutzmaßnahmen einleiten. Eine solche Situation ist aber grundsätzlich unerwünscht und sollte vermieden werden. EP2852037 offenbart ein Verfahren zum Bestimmen der Luftspaltdicke zwischen dem Rotor und dem Stator eines Generators einer Windturbine.

Der Erfindung liegt somit die Aufgabe zugrunde, zumindest eines der o.g. Probleme zu adressieren. Insbesondere soll eine Lösung vorgeschlagen werden, die eine Schutzmaßnahme, insbesondere ein Anhalten eines Generators einer getriebelosen Windenergieanlage, bedingt durch thermische Ausdehnung eines Innenteils des Generators vermeidet. Zumindest soll zu bisher bekannten Lösungen eine Alternative vorgeschlagen werden.

Das Deutsche Patent- und Markenamt hat in der Prioritätsanmeldung zu vorliegender PCT-Anmeldung folgenden Stand der Technik recherchiert: DE 10 2014 208 791 A1 und US 2014/0054897 A1.

Erfindungsgemäß wird ein Verfahren zum Steuern einer getriebelosen Windenergieanlage nach Anspruch 1 vorgeschlagen. Diese Windenergieanlage weist einen Generator mit einem Stator und einem Läufer auf. Der Läufer ist somit, da es eine getriebelose Windenergieanlage ist, direkt mit einem aerodynamischen Rotor der Windenergieanlage gekoppelt. Der Begriff Läufer wird für den Generator daher verwendet, um diesen begrifflich auch besser zum aerodynamischen Rotor der Windenergieanlage abzugrenzen. Die Verwendung des Begriffs Läufer soll daher keine Einschränkung des Generatortyps implizieren.

Außerdem kann der Generator sowohl als Innenläufer als auch als Außenläufer ausgebildet sein. Ist er als Innenläufer ausgebildet, dreht sich bestimmungsgemäß der Läufer in radialer Richtung gesehen innerhalb des Stators. Der Stator ist dann also in Bezug auf den Läufer ein Außenteil und der Läufer ein Innenteil.

Ist der Generator als Außenläufer ausgebildet, dreht sich der Läufer bestimmungsgemäß radial gesehen außerhalb des Stators und der Läufer bildet somit ein Außenteil und der Stator ein Innenteil.

Das Verfahren schlägt vor, eine Temperatur des Außenteils als Außenteiltemperatur zu erfassen und eine Temperatur des Innenteils als Innenteiltemperatur. Besonders kann hierbei für den Stator eine Nuttemperatur erfasst werden, also eine Temperatur in den Nuten, in denen die Statorwicklungen verlaufen. Das wäre dann ein Temperatursensor zum Aufnehmen der Außenteiltemperatur im Falle eines Innenläufers oder zum Aufnehmen der Innenteiltemperatur im Falle eines Außenläufers.

Am Läufer kann die Temperatur bspw. im Bereich eines oder mehrerer Polschuhe aufgenommen werden. Entsprechend würde hiermit im Falle eines Innenläufers die Innenteiltemperatur und im Falle des Außenläufers die Außenteiltemperatur aufgenommen werden.

Es wird dann vorgeschlagen, dass der Generator in Abhängigkeit einer Temperaturdifferenz zwischen der Außenteiltemperatur und der Innenteiltemperatur gesteuert wird, nämlich so, dass einer Verringerung der Luftspaltdicke durch thermische Ausdehnung des Generators entgegengewirkt wird.

Es wird somit eine Steuerung vorgeschlagen, die nicht oder nicht nur absolute Temperaturen betrachtet, sondern eine Temperaturdifferenz zwischen Außenteiltemperatur und Innenteiltemperatur. Hierbei wurde besonders erkannt, dass eine Verringerung der Luftspaltdickte auftreten kann, wenn sich das Innenteil thermisch stärker ausdehnt als das Außenteil. In diesem Fall könnte es also ungünstig sein, das Außenteil möglichst gut zu kühlen. Es ist zwar generell vorteilhaft, den Generator zu kühlen, um seine Eigenschaft zu verbessern, aber hinsichtlich der Luftspaltdicke kommt es zumindest auch auf die Temperaturdifferenz an.

Gemäß einer Ausführungsform wird somit vorgeschlagen, dass das Außenteil in Abhängigkeit der Temperaturdifferenz so gekühlt oder beheizt wird, dass der Verringerung der Luftspaltdicke entgegengewirkt wird. Das Außenteil so zu kühlen, dass dieser Verringerung der Luftspaltdicke entgegengewirkt wird, kann besonders bedeuten, dass seine Kühlung verringert wird, oder anders ausgedrückt, dass das Außenteil so schwach gekühlt wird, oder gar nicht gekühlt wird, dass der Verringerung der Luftspaltdicke entgegengewirkt wird. Es wird also gezielt darauf geachtet, dass sich das Außenteil ebenfalls thermisch bedingt ausdehnen kann. Zumindest wird dieser Aspekt mit berücksichtigt. Es kommt aber auch in Betracht, dass das Außenteil sogar aktiv beheizt wird, um dadurch eine thermisch bedingte Ausdehnung des Außenteils zu erreichen.

Dehnt sich also bspw. das Innenteil thermisch aus und kann dem nicht mehr durch weitere Kühlung entgegen gewirkt werden, so kann eine Verringerung der Luftspaltdicke dadurch verhindert werden oder ihr entgegen gewirkt werden, dass das Außenteil beheizt wird.

Gemäß einer Ausgestaltung wird vorgeschlagen, dass das Außenteil so gekühlt oder beheizt wird, dass die Außenteiltemperatur höchstens um eine Unterschreitungstemperatur unterhalb der Innenteiltemperatur liegt. Es wird also die Temperaturdifferenz zwischen der Außenteiltemperatur und der Innenteiltemperatur betrachtet. Als Grenzwert wird dann die Unterschreitungstemperatur berücksichtigt. Das Außenteil darf also nur so stark gekühlt werden, dass es maximal um den Wert der Unterschreitungstemperatur unter die Innenteiltemperatur abgekühlt wird. Fällt seine Temperatur selbst ohne Kühlen um den Wert der Unterschreitungstemperatur unter die Innenteiltemperatur ab, wird das Außenteil beheizt.

Es wird vorgeschlagen, die Unterschreitungstemperatur je nach Anwendungsfall auszuwählen oder vorzugeben oder ggf. auch im laufenden Betrieb, vorzugsweise auch adaptiv, anzupassen. Die Unterschreitungstemperatur könnte auch den Wert null annehmen. In diesem Fall würde das Außenteil so gekühlt oder beheizt werden, dass die Außenteiltemperatur wenigstens so hoch ist wie die Innenteiltemperatur. Diese Variante, demnach die Außenteiltemperatur also allenfalls auf die Innenteiltemperatur abfallen soll, ist somit ein ausdrücklicher Spezialfall, bei dem die Unterschreitungstemperatur den Wert null aufweist.

Die Unterschreitungstemperatur könnte auch einen negativen Wert annehmen und das würde bedeuten, dass die Außenteiltemperatur wärmer sein muss, als die Innenteiltemperatur. Dieser Fall wird speziell dadurch berücksichtigt, dass vorgeschlagen wird, dass die Außenteiltemperatur wenigstens um eine Überschreitungstemperatur oberhalb der Innenteiltemperatur liegt. Es wird hierbei also davon ausgegangen, dass die Überschreitungstemperatur einen positiven Wert annimmt. Hierbei wird also gezielt das Außenteil auf eine höhere Temperatur gebracht als das Innenteil.

Gemäß einer Ausführungsform wird vorgeschlagen, dass das Außenteil in Abhängigkeit der Temperaturdifferenz elektrisch beheizt wird und/oder das Innenteil elektrisch entlastet wird. Dazu wird vorgeschlagen, dass in dem Fall, dass der Generator, besonders ein Synchrongenerator, als Innenläufer ausgebildet, wenn also das Außenteil den Stator bildet, eine Statorspannung reduziert wird. Dadurch kann der Statorstrom erhöht werden, um dadurch den Stator durch erhöhte ohmsche Verluste im Stator zu erwärmen. Es wird also hier die Spannung an entsprechenden Statorklemmen des Stators reduziert und das führt dazu, dass der Stator einen höheren Statorstrom abgibt. Die Abgabeleistung, vereinfacht ausgedrückt also Produkt aus Statorspannung und Statorstrom, kann hierbei im Wesentlichen gleich bleiben. Der Generator erzeugt also nachwievor gleich viel Leistung, die ohnehin im Wesentlichen durch die verfügbare Windleistung und die entsprechende Einstellung des aerodynamischen Rotors vorgegeben ist. Durch den erhöhten Statorstrom steigen aber die ohmschen Verluste in dem Stator, also die Leitungsverluste in den Statorwicklungen, an. Dadurch erwärmt sich der Stator stärker.

Es kann hiermit also auf einfache Art und Weise ein Beheizen des Stators vorgenommen werden, in dem seine Ausgangsspannung an den Statorklemmen reduziert wird.

Das kann bspw. im Falle eines an den Stator angeschlossenen passiven Gleichrichters, der auf einen ersten Gleichspannungszwischenkreis gleichrichtet, dadurch eingestellt bzw. gesteuert werden, dass die Spannung dieses ersten Gleichspannungszwischenkreises verringert wird. Das kann bspw. durch einen Hochsetzsteller vorgenommen werden, der zwischen diesem ersten Gleichspannungszwischenkreis und einem zweiten Gleichspannungszwischenkreis mit höherer Zwischenkreisspannung angeordnet ist, um nur ein Beispiel zu nennen.

Ist der Generator als Außenläufer ausgebildet, ist also das Außenteil der Läufer, wird gemäß einer Ausführungsform ein Läuferstrom erhöht, um den Läufer durch erhöhte ohmsche Verluste im Läufer zu erwärmen. Das kann bspw. dadurch erreicht werden, dass als Generator ein fremderregter Synchrongenerator verwendet wird, bei dem der Läufer durch einen Erregerstrom erregt wird. Um nun den Läufer zu beheizen oder stärker zu beheizen, kann dieser Erregerstrom erhöht werden. Das kann bspw. dadurch erfolgen, dass der Erregerstrom durch einen Stromsteller erzeugt wird und dass der Stromsteller entsprechend den Erregerstrom erhöht.

Es kommt hier auch in Betracht, statt einer Erhöhung der Verlustleistung des Läufers, oder ergänzend dazu, eine Verringerung der Verlustleistung des Stators durch Erhöhung der Statorspannung vorzusehen. In diesem Fall, dass der Generator als Außenläufer ausgebildet ist, wird gemäß einer Variante somit vorgeschlagen, dass eine Statorspannung erhöht wird, um den Statorstrom zu reduzieren, um den Stator durch die verringerten Verluste im Stator weniger zu erwärmen.

Gemäß einer weiteren Ausführungsform wird vorgeschlagen, dass zur Kühlung des Außenteils die Temperaturdifferenz und die Außenteiltemperatur überwacht werden und die Kühlung des Außenteils gestartet wird, wenn die Außenteiltemperatur wenigstens um die Überschreitungstemperatur oberhalb der Innenteiltemperatur liegt oder die Außenteiltemperatur oberhalb einer Grenztemperatur liegt.

Es erfolgt somit eine Kühlung in Abhängigkeit einer Differenztemperatur so, dass einer zu großen Differenztemperatur entgegengewirkt wird. Außerdem wird aber eine absolute Temperatur überwacht, nämlich die erste Grenztemperatur, die ebenfalls vorgegeben wird und optional einstellbar ist, insbesondere adaptiv veränderbar ist. Durch diese zusätzliche Überwachung der absoluten Temperatur wird somit ein Überhitzen des Außenteils verhindert. Die Kühlung funktioniert also so, dass sie zunächst die Außenteiltemperatur basierend auf der Innenteiltemperatur führt, also besonders eine etwas höhere Temperatur zulässt, dann aber kühlend eingreift. Dadurch wird vermieden, dass eine Kühlung zu einer Verringerung der Luftspaltdicke führt. Zusätzlich wird aber ein Überhitzen des Außenteils verhindert.

Vorzugsweise wird hierfür vorgeschlagen, dass die Kühlung des Außenteils eine variable Kühlstärke aufweist und in ihrer Kühlstärke mit weiter ansteigender Außenteiltemperatur erhöht wird. Vorzugsweise wird sie linear mit weiter ansteigender Außenteiltemperatur von einer Anfangskühlstärke bis zu einer Maximalkühlstärke erhöht. Das betrifft sowohl den Fall, wenn die Außenteiltemperatur um die Überschreitungstemperatur oberhalb der Endtemperatur liegt, also bei relativer Temperaturerhöhung, als auch den Fall, wenn die Außenteiltemperatur oberhalb der ersten Grenztemperatur liegt, also bei absoluter Temperaturerhöhung. Vorzugsweise wird ausgehend von dem Kühlbeginn, also ab der Überschreitung der Innenteiltemperatur um die Überschreitungstemperatur, oder ab der ersten Grenztemperatur, eine weitere Zieltemperatur gesetzt, die bspw. um 10K oder 20K höher liegen kann. Vorsorglich wird darauf hingewiesen, dass natürlich grundsätzlich auch in Betracht kommen kann, dass die relative und absolute Temperaturüberwachung zugleich ansprechen.

Gemäß einer Ausführungsform wird vorgeschlagen, dass eine Beheizung des Außenteils vorgenommen wird, sobald die Außenteiltemperatur um weniger als eine Mindestdifferenztemperatur oberhalb der Innenteiltemperatur liegt. Vorzugsweise wird diese Mindesttemperatur kleiner als die Überschreitungstemperatur gewählt.

Bspw. ist es sinnvoll, die Mindestdifferenztemperatur halb so groß zu wählen, wie die Überschreitungstemperatur. Mit dieser Maßnahme wird zunächst ein klares Kriterium festgelegt, wann eine Beheizung des Außenteils erfolgt. Auch diese Beheizung wird abhängig von der Differenztemperatur bzw. einer Temperaturdifferenz gesteuert. Besonders vorteilhaft ist die Kombination mit der Kühlungssteuerung. So wird die Differenztemperatur überwacht und die Kühlung eingeschaltet, sobald die Differenztemperatur den Wert der Überschreitungstemperatur erreicht hat. Dadurch wird besonders erreicht, dass vorher keine Kühlung des Außenteils erfolgt, sondern erst ab dem Moment, wo dieser Temperaturabstand zwischen Außenteiltemperatur und Innenteiltemperatur vorliegt. Liegt die Differenz darunter, wird nicht gekühlt, es sei denn, das Außenteil wird viel zu heiß.

Fällt nun aber die Außenteiltemperatur soweit ab, dass sie nur noch wenig wärmer als die Innenteiltemperatur ist, wird vorgeschlagen, das Außenteil zu beheizen. Dies erfolgt aber erst, wenn sie weniger als die Mindestdifferenztemperatur über der Innenteiltemperatur liegt. Liegt die Außenteiltemperatur also um einen Wert oberhalb der Innenteiltemperatur, der größer als die Mindestdifferenztemperatur ist, aber kleiner als die Überschreitungstemperatur, so wird das Außenteil weder beheizt noch gekühlt.

Vorzugsweise ist die Beheizung variabel, weist also eine variable Heizleistung auf und wird in ihrer Heizleistung mit weiter abfallender Außenteiltemperatur erhöht, wobei auch dies relativ zur Innenteiltemperatur betrachtet wird. Vorzugsweise erfolgt diese Erhöhung linear mit weiter abfallender Außenteiltemperatur von einer Anfangsheizleistung bis zu einer Maximalheizleistung. Bei einer vorbestimmten Differenztemperatur, also bspw. 10K unterhalb der Innenteiltemperatur, kann dann die maximale Heizleistung erreicht sein. Die Einstellung der Heizleistung kann bspw., wenn das Außenteil ein Stator ist, durch das Absinken der Statorspannung bei gleichbleibender Statorleistung erreicht werden.

Erfindungsgemäß wird vorgeschlagen, dass das Verfahren adaptiv arbeitet. Besonders die vorgebbaren Werte werden dabei adaptiv angepasst bzw. eingestellt. Vorzugsweise startet ein solcher adaptiver Vorgang mit einem vergleichsweise sinnvollen Anfangswert, der dann angepasst wird.

Erfindungsgemäß wird vorgeschlagen, dass die Luftspaltdicke überwacht wird und bei Unterschreiten einer vorgebbaren Mindestdicke eine Sicherheitsmaßnahme ausgelöst wird, um eine Berührung zwischen Außenteil und Innenteil zu verhindern. Wird also diese Mindestdicke unterschritten, wird die Sicherheitsmaßnahme ausgelöst und bei jedem Auslösen dieser Sicherheitsmaßnahme wird diese vorgebbare oder veränderbare Überschreitungstemperatur erhöht. Bspw. kann diese vorgebbare Überschreitungstemperatur bei jedem Auslösen der Sicherheitsmaßnahme um 1K oder 5K erhöht werden. Das Auslösen wird also als klares Zeichen dafür gewertet, dass der Temperaturabstand noch nicht groß genug war, dass also noch zu früh das Außenteil gekühlt wurde.

Erfindungsgemäß wird auch vorgesehen, dass die Überschreitungstemperatur schrittweise wieder reduziert wird, wenn innerhalb eines Prüfzeitraums die Sicherheitsmaßnahme nicht ausgelöst wurde. Ist also die Sicherheitsmaßnahme bspw. über einen Tag, eine Woche oder einen Monat nicht ausgelöst worden, war die Überschreitungstemperatur wohl ausreichend und könnte wenigstens etwas wieder herabgesetzt werden, um den Generator insgesamt etwas besser kühlen zu können.

Gemäß einer weiteren Ausführungsform wird vorgeschlagen, dass zwischen einem Normalbetrieb und einem reduzierten Betrieb der Windenergieanlage unterschieden wird. Im reduzierten Betrieb wird dabei die Windenergieanlagen gegenüber dem Normalbetrieb bei gleichen Windbedingungen mit einer reduzierten Drehzahl betrieben. Der reduzierte Betrieb kann bspw. eine Reduzierung der Drehzahl zum Zwecke einer Geräuschminderung betreffen. Dazu wird nun vorgeschlagen, dass das Verfahren zum Kühlen des Generators im Normalbetrieb andere Parameterwerte verwendet, als im reduzierten Betrieb. Insbesondere wird vorgeschlagen, dass die Überschreitungstemperatur und außerdem oder alternativ die Grenztemperatur unterschiedlich gewählt werden. Dazu können alternative Parametersätze hinterlegt sein. Auch ein vorgeschlagenes adaptives Verfahren kann angewendet werden, in dem die Adaption jeweils den aktuellen Parametersatz der aktuellen Betriebsart betrifft. Wird also die Windenergieanlage bspw. im reduzierten Betrieb betrieben und ergibt die Adaption, dass die Überschreitungstemperatur verringert werden soll, so wird nur der Wert der Überschreitungstemperatur des Datensatzes für diesen reduzierten Betrieb adaptiert. Somit kann insgesamt auf einfache Art und Weise die jeweilige Besonderheit des Normalbetriebs oder reduzierten Betriebs berücksichtigt werden.

Vorzugsweise wird vorgeschlagen, dass für das Innenteil und das Außenteil unterschiedliche Kühlmedien und außerdem oder alternativ unterschiedliche Kühlungsarten vorgesehen sind. Mit diesen unterschiedlichen Kühlmedien oder Kühlungsarten können die Besonderheiten des Außenteils und des Innenteils berücksichtigt werden. Es kommt hinzu, dass durch unterschiedliche Kühlmedien bzw. Kühlungsarten auch unterschiedliche Kühlleistungen und insbesondere Kühlergebnisse erzielt werden können. Durch Berücksichtigung der Differenztemperatur zwischen Außenteiltemperatur und Innenteiltemperatur können dadurch aber unterschiedliche Kühlergebnisse berücksichtigt werden. Besonders kann einem Effekt entgegengewirkt werden, bei dem bspw. eine innere Kühlung weniger effizient arbeitet, insbesondere ein geringeres Kühlergebnis schafft und dadurch zu einer stärkeren thermisch bedingten Ausdehnung des Innenteils führen könnte. Durch die Berücksichtigung der Differenztemperatur kann dem gezielt entgegengewirkt werden.

Als Vorteil ergibt sich hier besonders, dass es weniger problematisch ist, unterschiedliche Kühlungsarten für Innenteil einerseits und Außenteil andererseits zu verwenden, wenn ein erfindungsgemäßes Verfahren verwendet wird.

Als unterschiedliche Kühlmedien kommen insbesondere Luft einerseits und ein flüssiges Kühlmedium wie Wasser oder Wasser mit Zusatzstoffen andererseits in Betracht. Als unterschiedliche Kühlungsarten kommt besonders eine aktive Kühlung einerseits, bei der ein Kühlmedium aktiv entlang des zu kühlenden Teils bewegt wird, in Betracht, als auch eine passive Kühlung andererseits, bei der besonders ein Luftstrom entlang des zu kühlenden Teils ermöglicht wird, aber nicht unbedingt durch zusätzliche Aktuatoren gefördert wird.

Vorzugsweise wird für das Innenteil eine Luftkühlung und/oder eine passive Kühlung vorgeschlagen und für das Außenteil eine Wasserkühlung, insbesondere dazu eine aktive Kühlung.

Erfindungsgemäß wird zudem eine Windenergieanlage vorgeschlagen. Sie weist einen Generator mit einem Stator und einem Läufer und dazwischen mit einem Luftspalt mit einer Luftspaltdicke auf. Der Generator kann als Innenläufer oder als Außenläufer ausgebildet sein. Wenn der Generator als Innenläufer ausgebildet ist, weist er einen Stator als Außenteil und einen Läufer als Innenteil auf. Ist der Generator als Außenläufer ausgebildet, weist er den Läufer als Außenteil und den Stator als Innenteil auf.

In jedem Fall ist ein Außenteiltemperaturmessmittel zum Erfassen einer Temperatur des Außenteils als Außenteiltemperatur vorgesehen. Außerdem ist ein Innenteiltemperaturmessmittel zum Erfassen einer Temperatur des Innenteils als Innenteiltemperatur vorgesehen. Jedes dieser Temperaturmessmittel kann jeweils einen oder mehrere Temperatursensoren aufweisen, die vorzugsweise über einen Umfang des Generators und damit jedenfalls über einen Umfang des Außenteils bzw. Innenteils verteilt angeordnet sind.

Ferner ist ein Differenzmittel zum Bilden einer Temperaturdifferenz als Differenz zwischen der Außenteiltemperatur und der Innenteiltemperatur vorgesehen. Damit kann aus der Außenteiltemperatur und der Innenteiltemperatur eine Differenz gebildet werden, die die Temperaturdifferenz bildet. Ganz grundsätzlich kann die Temperaturdifferenz, die somit eine Differenz zwischen der Außenteiltemperatur und der Innenteiltemperatur bildet, auch synonym als Teiletemperaturdifferenz bezeichnet werden. Mit der Temperaturdifferenz wird nämlich die Differenz der Temperaturen der beiden Teile, also des Außenteils und des Innenteils bezeichnet. Bei Verwendung jeweils mehrerer Temperatursensoren für das Außenteiltemperaturmessmittel bzw. des Innenteiltemperaturmessmittels kann jeweils ein Mittelwert der erfassten Temperaturen verwendet werden, oder es kann jeweils der größte erfasste Wert verwendet werden.

Schließlich ist ein Steuerungsmittel vorgesehen, dass dazu vorbereitet ist, den Generator in Abhängigkeit der Temperaturdifferenz so zu steuern, dass einer Verringerung der Luftspaltdicke durch thermische Ausdehnung des Generators entgegengewirkt wird.

Die Steuerung erfolgt insbesondere so, wie vorstehend gemäß wenigstens einer Ausführungsform des Verfahrens zum Steuern der Windenergieanlage erläutert wurde.

Vorzugsweise weist die Windenergieanlage eine Innenkühlvorrichtung zum Kühlen des Innenteils auf und außerdem oder alternativ weist sie eine Außenkühlvorrichtung zum Kühlen des Außenteils auf. Für das Außenteil und das Innenteil ist somit jeweils eine Kühlvorrichtung vorgesehen.

Vorzugsweise sind für die Innenkühlvorrichtung und die Außenkühlvorrichtung unterschiedliche Kühlmedien und/oder Kühlungsarten vorgesehen. Insbesondere ist vorgesehen, dass die Innenkühlvorrichtung als Luftkühlung und außerdem oder alternativ als passive Kühlung ausgebildet ist. Für die Außenkühlvorrichtung ist vorzugsweise vorgesehen, dass diese als Wasserkühlung ausgebildet ist.

Es wird somit eine getriebelose Windenergieanlage vorgeschlagen, die dadurch gekennzeichnet ist, dass sie dazu eingerichtet ist, ein Verfahren gemäß wenigstens einer vorstehend beschriebenen Ausführungsform durchzuführen.

Insbesondere ist dazu das beschriebene Verfahren ganz oder teilweise in dem Steuerungsmittel implementiert. Das vorgesehene Differenzmittel kann auch als Software implementiert sein, insbesondere in dem Steuerungsmittel oder einer separaten Einrichtung implementiert sein.

Die Temperaturdifferenz kann auch anders dargestellt werden, wie bspw. als Faktor. Liegt bspw. ein Temperaturbereich von 80 bis 120 Grad Celsius vor, entspricht dies einer absoluten Temperatur von 352 bis 392K. Eine Temperaturdifferenz von 3,5K könnte dann auch etwa durch einen Faktor von 1,01 dargestellt werden.

Nachfolgend wird die Erfindung beispielhaft anhand wenigstens eines konkreten Ausführungsbeispiels exemplarisch unter Bezugnahme auf die begleitenden Figuren näher erläutert.

Fig. 1 zeigt eine Windenergieanlage in einer perspektivischen Ansicht.

Fig. 2 zeigt einen Teil eines Generators in einer Explosionsansicht.

Fig. 3 zeigt schematisch unterschiedliche, mögliche Situationen für einen Luftspalt.

Fig. 4 zeigt schematisch eine Steuerungsanordnung.

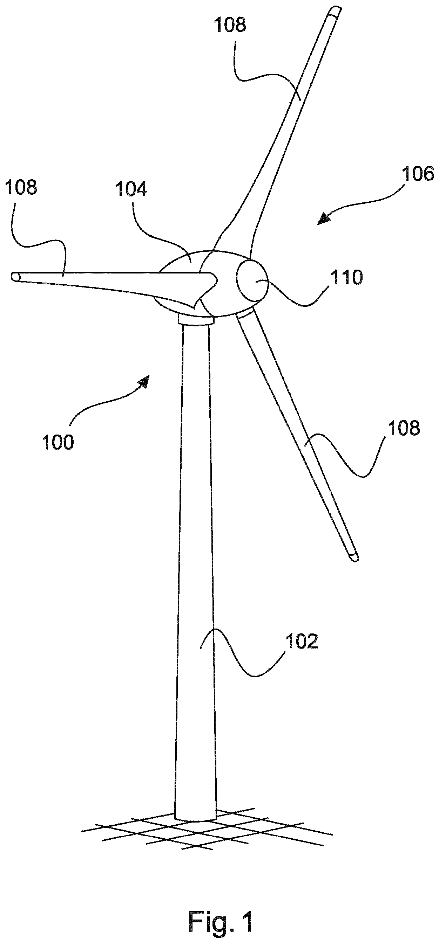

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

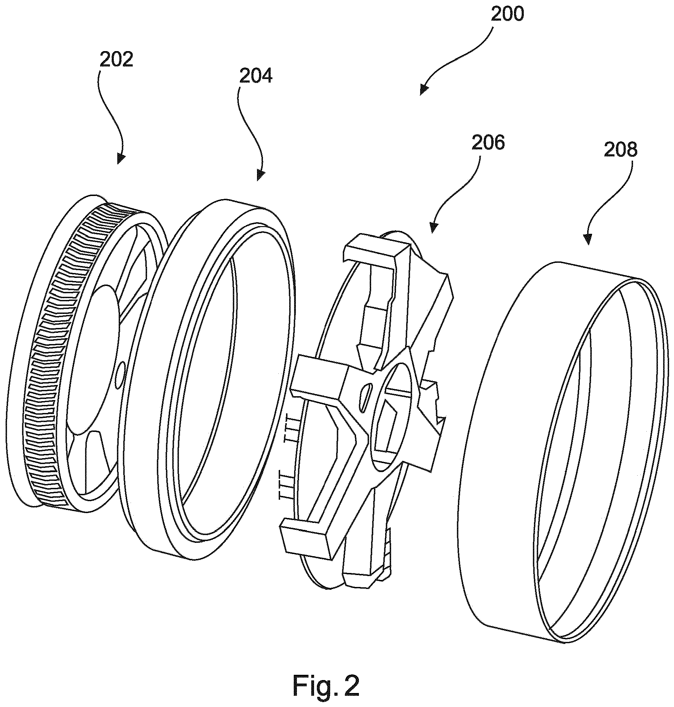

Figur 2 zeigt einen Generator 200 mit einem Läufer 202 und einem Stator 204. Der Generator 200 ist hier als Innenläufer ausgestaltet und der Läufer 202 wird zur bestimmungsgemäßen Verwendung in den Stator 204 hineingeschoben und dreht sich dann innerhalb dieses Stators 204. Zwischen diesem Läufer 202 und dem Stator 204 bildet sich dann ein dünner Luftspalt aus.

Weiterhin ist ein Statorträger 206 dargestellt, an dem der Stator 204 bestimmungsgemäß befestigt wird. Diese drei Elemente, nämlich der Läufer 202, der Stator 204 und der Statorträger 206 werden dann im bestimmungsgemäßen Gebrauch von einer ebenfalls dargestellten Verkleidung 208 im Wesentlichen umgeben.

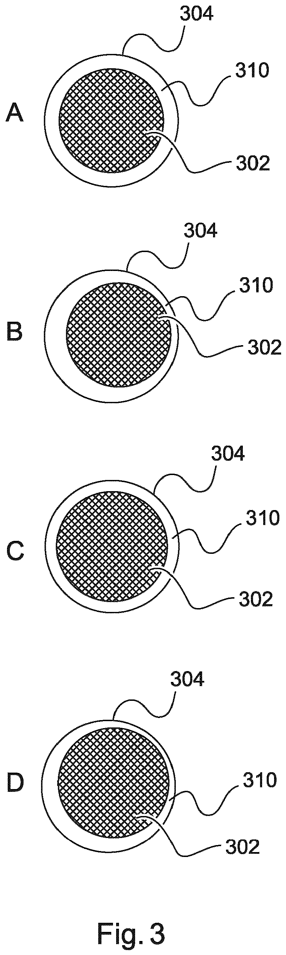

Figur 3 veranschaulicht vier grundsätzliche Situationen für einen Luftspalt 310, der in allen vier Darstellungen mit demselben Bezugszeichen bezeichnet ist. Ebenfalls zeigen somit alle vier Zustände auch einen Läufer 302, veranschaulicht durch den inneren Kreis, und einen Stator 304 bzw. die innere Grenze des Stators 304, veranschaulicht durch den größeren äußeren Kreis.

In Figur 3 zeigt die Situation A einen Sollzustand oder Idealzustand, bei dem der Läufer 302 ideal konzentrisch in dem Stator 304 angeordnet ist. Damit verläuft auch der Luftspalt 310 gleichmäßig zwischen diesen beiden Bauteilen. Außerdem ist der Luftspalt 310 nicht zu dünn.

Fall B zeigt eine exzentrische Situation, bei der der Läufer 302 nicht mehr exakt konzentrisch in dem Stator 304 angeordnet ist. Das Resultat ist, dass der Luftspalt 310 nicht mehr überall die gleiche Dicke hat, sondern in einem Bereich vergleichsweise dünn geworden ist und im anderen Bereich vergleichsweise dick. Die Situation B ist zwar nicht optimal, lässt aber einen Weiterbetrieb des betreffenden Generators zu.

Die Situation C zeigt eine Situation, in der der Läufer 302 im Wesentlichen konzentrisch in dem Stator 304 angeordnet ist, bei dem der Luftspalt 310 aber verkleinert ist, jedenfalls im Vergleich zur Situation A. Dies kann das Ergebnis einer Ausdehnung des Läufers 302 sein, während sich der Stator 304 nicht oder nicht so stark ausgedehnt hat. Aber auch bei der Situation C ist der Generator noch betreibbar.

Die Situation D zeigt dann eine Situation, bei der der Luftspalt 310 an einer Stelle so dünn geworden ist, dass eine Sicherheitsmaßnahme ausgelöst wird. Dabei ist in der Situation D sowohl der Luftspalt 310 insgesamt verkleinert, wie durch eine Ausdehnung des Läufers 302, und der Läufer 302 ist nicht mehr konzentrisch in dem Stator 304 angeordnet. Dadurch kommt es zu diesem sehr dünnen Luftspalt 310 in einem Bereich und zu der genannten Sicherheitsauslösung, die auch als Luftspaltschalterauslösung bezeichnet werden kann.

Figur 3 veranschaulicht nur verschiedene Möglichkeiten eines Zustandes des Luftspalts 310. Das wurde für den Fall eines Innenläufers beschrieben, bei dem der Läufer 302 das Innenteil und der Stator 304 das Außenteil bildet. Dieselben Erläuterungen ergeben sich aber sinngemäß auch, wenn der Generator als Außenläufer ausgebildet ist, wenn also der Läufer außen und der Stator innen sind. Das entspräche der Figur 3 mit dem Unterschied, dass der Läufer 302 ein Stator wäre und der Stator 304 ein Läufer.

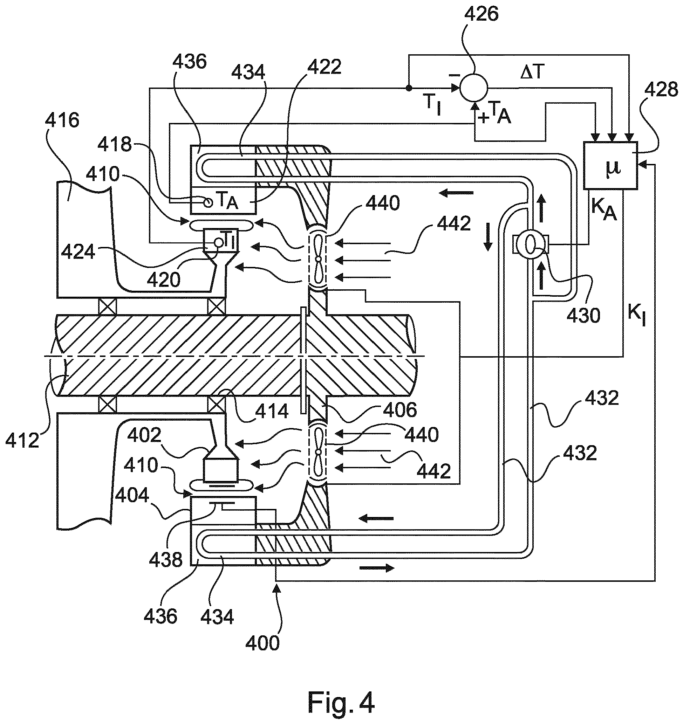

Figur 4 veranschaulicht ein Steuerungskonzept bzw. eine Steuerungsstruktur zum Steuern besonders der Kühlung des veranschaulichend im Schnitt dargestellten Generators 400. Auch hier wird als Generator 400 beispielhaft ein Innenläufer verwendet, der einen Läufer 402 und einen Stator 404 aufweist. Der Läufer 402 ist auf einem Achszapfen 412 durch zwei Lager 414 drehbar gelagert. An dem Achszapfen 412 ist ein Statorträger 406 befestigt, der den Stator 404 fest trägt. Der Statorträger 406 wird schließlich an einem Maschinenträger gehalten, der hier nicht dargestellt ist. Der Achszapfen 412 und der Statorträger 406 sind zur Veranschaulichung, dass sie die wesentlichen tragenden Elemente hier sind, schraffiert dargestellt. Auch andere Elemente, wie auch der Stator 404 und der Läufer 402 weisen grundsätzlich Schnittflächen auf, die hier aber nicht schraffiert dargestellt sind, zumal es auf die konkrete Konstruktion im Detail nicht ankommt.

Im Übrigen ist fest mit dem Läufer 402 eine Nabe 416 verbunden, die drei Rotorblätter tragen kann, um darüber bei entsprechendem Wind die Nabe 416 und damit den Läufer 402 zu drehen.

Zwischen dem Läufer 402 und dem Stator 404 ist ein Luftspalt 410 ausgebildet. Außerdem ist jeweils ein Außensensor 418 und ein Innensensor 420 gezeigt. Der Außensensor 418 ist im Bereich von Statorblechpaketen 422 des Stators 404 angeordnet und er steht hier repräsentativ für ein Außenteiltemperaturmessmittel, das auch weitere Sensoren umfassen kann.

Der Innensensor 420 ist im Bereich von Polschuhen 422 des Läufers 402 angeordnet und steht hier repräsentativ für ein Innenteiltemperaturmessmittel, dass auch weitere Sensoren umfassen kann.

Der Außensensor 418 erfasst eine Außenteiltemperatur $T_A$ und der Innensensor 420 erfasst eine Innenteiltemperatur $T_I$. Diese beiden Temperaturen werden an dem Summierglied 426 voneinander abgezogen, so dass sich als Differenz bzw. Temperaturdifferenz eine Differenztemperatur $\Delta T$ ergibt, die auch als Teiletemperaturdifferenz bezeichnet werden kann. Diese Temperaturdifferenz $\Delta T$ ergibt sich aus der Außenteiltemperatur $T_A$ und der Innenteiltemperatur Ti nach der Gleichung:

$$\Delta T = T_A - T_I$$

Die Differenztemperatur $\Delta T$ als auch die Außenteiltemperatur $T_A$ und die Innenteiltemperatur Ti werden als Eingangsgrößen in ein Steuerungsmittel 428 eingegeben. Das Summierglied 426 dient im Übrigen als Differenzmittel.

Das Steuerungsmittel 428 kann nun in Abhängigkeit der Differenztemperatur $\Delta T$ bzw. der Temperaturdifferenz mit den beiden Einzeltemperaturen eine Kühlung des Generators 400 ansteuern. Dazu ist für den Stator 404 eine Flüssigkeitskühlung mit einer Kühlpumpe 430, Kühlkanälen 432 und Kühlwendeln 434 vorgesehen. Die Kühlwendel 434 sind hier veranschaulichend in einem Statortragring 436 des Stators 404 angeordnet. Der Statortragring 436, der von dem Statorträger 406 gehalten wird, hält seinerseits wiederum die Statorblechpakete 422, was hier nur veranschaulichend skizziert ist.

Wenn nun die Differenztemperatur $\Delta T$ oberhalb einer vorgebbaren Überschreitungstemperatur liegt, oder der Absolutwert der Außenteiltemperatur $T_A$ oberhalb einer ersten Grenztemperatur liegt, wird die Kühlpumpe 430 durch das Kühlsignal $K_A$ für die Außenkühlung in Betrieb genommen und ein flüssiges Kühlmedium gemäß der an den Kühlkanälen 432 angezeigten Pfeile durch die Kühlwendel 423 gepumpt. Steigt die Differenztemperatur $\Delta T$ bzw. die absolute Außenteiltemperatur $T_A$ noch weiter an, kann mit diesem Anstieg linear die Pumpleistung und damit die Förderleistung der Kühlpumpe 430 weiter erhöht werden. Diese Steuerung kann das Steuerungsmittel 428 durchführen.

Außerdem ist noch ein Abstandssensor 438 dargestellt, der die Luftspaltdicke des Luftspalts 410 misst und exemplarisch für diverse weitere solcher Abstandssensoren steht, die vorgesehen sein können, um an weiteren Positionen des Luftspalts 410 seine Dicke zu erfassen. Das Ergebnis kann, wie das in Figur 4 veranschaulicht ist, in dem Steuerungsmittel 428 ausgewertet werden.

Über die Kühlpumpe 430, die Kühlkanäle 432 und die Kühlwendeln 434 erfährt somit der Stator 404 und damit das Außenteil eine Kühlung mittels eines flüssigen Mediums. Dies bildet somit eine Außenkühlvorrichtung. Zum Kühlen des Läufers 402 und damit des Innenteils sind Lüfter 440 in dem Statorträger 406 vorgesehen. Diese Lüfter 440 drücken jeweils einen Luftstrom 442 durch den Statorträger, der hier als glockenförmige Konstruktion ausgebildet sein kann und auch als Statorglocke bezeichnet werden kann, zum Läufer 402 hin. Dort kann der Luftstrom sich aufteilen und durch verschiedene Öffnungen in dem Läufer 402 und auch durch den Luftspalt 410 strömen.

Die Lüfter 440, die somit eine Innenkühlvorrichtung bilden, können ebenfalls über das Steuerungsmittel 428 angesteuert werden. Dazu sendet das Steuerungsmittel 428 ein Kühlsignal für die Innenkühlvorrichtung $K_I$.

Somit kann der Läufer 402 und der Stator 404 voneinander unabhängig in ihrer Kühlung gesteuert werden. Diese Steuerung übernimmt in dem Beispiel der Figur 4 das Steuerungsmittel 428. Besonders die Außenteiltemperatur $T_A$ wird in Abhängigkeit der Differenztemperatur $\Delta T$ gesteuert. Der Absolutwert der Außenteiltemperatur $T_A$ kann gleichwohl auch unmittelbar berücksichtigt werden. Besonders wird vorgeschlagen, dass die Kühlung des Stators 404 und damit die Außenteilkühlung erst beginnt, wenn die Außenteiltemperatur $T_A$ um eine Überschreitungstemperatur über der Innenteiltemperatur $T_I$ liegt. Die Innenteiltemperatur kann grundsätzlich in herkömmlicherweise gesteuert werden, nämlich insbesondere abhängig der erfassten Innenteiltemperatur

$T_I$.

Das System erreicht also grundsätzlich eine höhere Außenteiltemperatur $T_A$ als die Innenteiltemperatur $T_I$. Dadurch wird vermieden, dass sich der Läufer 402 thermisch stärker radial ausdehnt, als der Stator 404, so dass dadurch vermieden wird, dass sich die Luftspaltdicke insgesamt verringert. Sollte dennoch einmal eine zu geringe Luftspaltdicke auftreten, so kann dies durch den Abstandssensor 438 erfasst werden und notfalls eine Sicherheitsmaßnahme ausgelöst werden.

Jedenfalls können aber solche Sicherheitsmaßnahmen durch die vorgeschlagene thermische Steuerung vermieden werden bzw. es ist möglich, besonders knappe Luftspaltdicken zu bemessen. Auch ist es möglich, besondere Betriebsmodi, besonders einen schallreduzierten Betriebsmodus, speziell zu berücksichtigen. Besonders bei einem schallreduzierten Betriebsmodus kann nämlich vorgesehen sein, dass bei möglichst viel Leistung, die natürlich immer angestrebt wird, eine möglichst geringe Drehzahl verwendet wird. Das kann besonders bei einem luftgekühlten Innenläufer zu einer vergleichsweise starken Erwärmung und damit unverhältnismäßig großen thermischen Ausdehnung kommen.

Besonders über herkömmliche Generatortemperaturregelungen, bei denen lediglich abhängig von absoluten Temperaturen eine Kühlung ein- oder ausgeschaltet wird, kann eine solche differenzierte Betrachtung nicht vorgenommen werden.

Es wird somit durch eine Differenztemperaturregelung sichergestellt, dass der Stator immer wärmer ist als der Rotor des Generators, der hier als Läufer bezeichnet wird. Diese Aussage gilt für einen Innenläufer und bei einem Außenläufer ist es umgekehrt, dass nämlich durch die Differenztemperaturregelung sichergestellt wird, dass der Läufer immer wärmer ist, als der Stator. Voraussetzung für die vorgeschlagene Regelung ist, dass Außen- und Innenteil über getrennte Kühl- bzw. Heizsysteme verfügen, zumindest dass das Außenteil unabhängig von dem Innenteil gekühlt oder beheizt werden kann. Es kann dann also der äußere Teil des Generators wärmer gehalten werden als der innere, so dass der äußere Teil eine höhere thermische Ausdehnung erfährt, als der Innenteil und es dadurch nicht zur Auslösung einer Luftspaltüberwachung, also einer Sicherheitsmaßnahme bedingt durch einen zu dünnen Luftspalt kommt.

Besonders kann durch die vorgeschlagene Lösung eine bisherige Situation verbessert werden, bei der bei einem Innenläufer die Statorkühlung in Abhängigkeit der absoluten Statortemperatur gesteuert wurde, wobei die Statorkühlung nur ausgesetzt wurde, solange die Rotorkühlung, also die Kühlung des Läufers, funktionsunfähig war. Hierbei konnte es vorkommen, dass dann, wenn bei vollständiger Kühlleistung der Rotor stärker erwärmt als der Stator, er sich dann zu sehr ausdehnte und es zu einer Luftspaltschalterauslösung kommen konnte.

Es wurde somit eine Lösung geschaffen, bei der die Generatorkühlung, insbesondere die Statorkühlung bei einem Innenläufer, abhängig von der Differenz der Außenteiltemperatur zur Innenteiltemperatur angesteuert wird. Dadurch wird eine Übertemperatur des Stators gegenüber dem Rotor, also dem Läufer, sichergestellt.

Eine Weiterbildung kann dadurch erreicht werden, dass Parameter, besonders Ein- und Ausschalttemperaturschwellen, adaptiv nachgeführt werden, je nachdem wie häufig Luftspaltschalterauslösungen erfolgen, also je nachdem wie häufig das Unterschreiten einer Luftspaltdicke erkannt wurde und eine Sicherheitsauslösung durchgeführt wurde. Dadurch kann eine übermäßige Statorerwärmung, im Falle eines Innenläufers, mit entsprechend höheren Statorverlusten vermieden werden.

Ein weiterer Aspekt ist, dass dann, wenn die gewünschte Differenztemperatur ausschließlich mit der Ansteuerung der Kühlung nicht zu erreichen ist, vorgeschlagen wird, zusätzlich den Stator zu beheizen, wenn der Stator das Außenteil bildet. Diese Beheizung kann durch Absenken der Statorspannung erreicht werden, wodurch die Statorströme sich erhöhen und somit mehr Statorverluste auftreten, die den Stator dadurch beheizen. Dadurch kann selbst bei deaktivierter Statorkühlung eine Anpassung der Statortemperatur an die Rotortemperatur, also Läufertemperatur, ermöglicht werden.

Es somit ein Aspekt der vorliegenden Erfindung, dass das Außenteil, bspw. der Stator im Falle eines Innenläufers, mindestens genauso warm betrieben wird, wie der Innenteil, im Beispiel des Innenläufers also der Läufer. Dadurch soll sichergestellt werden, dass die betriebsbedingten Einflüsse der Luftspaltverkleinerung praktisch keinen Einfluss mehr haben.

Geht man also von einem Innenläufer aus, wird der Stator beheizt, wenn er nicht heiß genug ist, wenn er also unterhalb einer vorgegebenen Differenztemperatur im Vergleich zum Rotor liegt. Dazu wird hier vorgeschlagen, die Statorspannung abzusenken und damit, bei ungefähr gleichbleibender Leistung, den Strom zu erhöhen. Diese Stromerhöhung erhöht die ohmschen Verluste im Stator, der dadurch erwärmt wird.

Vorzugsweise wird nun vorgeschlagen, einen getrennten Differenztemperaturbereich zum Beheizen vorzugeben, in dem nämlich bei Unterschreiten einer zweiten Differenztemperatur, die hier auch als Mindestdifferenztemperatur bezeichnet wird, das Beheizen zu starten ist. Dazu wird weiter vorgeschlagen, proportional zum regulären Sollwert der Statorspannung diese abzusenken, nämlich proportional so, dass eine maximale Statorspannungsabsenkung am Ende eines zweiten Differenztemperaturbereichs erreicht wird. Dieser zweite Differenztemperaturbereich kann einen Wert der Außenteiltemperatur bezeichnen, der unterhalb der Innenteiltemperatur liegt, bspw. um 10K unterhalb des aktuellen Innenteiltemperaturwertes. Bis hierhin wird also die Statorspannung um einen maximalen Wert abgesenkt und damit die hierdurch maximal erreichbare bzw. vertretbare Beheizung des Stators erreicht.

Liegt also bspw. die Statortemperatur um eine zweite Differenztemperatur oder weniger oberhalb der Läufertemperatur, also bspw. nur um 5K oberhalb der Läufertemperatur, kann eine Beheizung, besonders durch die beschriebene Absenkung der Statorspannung durchgeführt werden. Diese Beheizung kann mit weiter abfallender Außenteiltemperatur bzw. Temperaturdifferenz weiter erhöht werden, bis das Ende eines zweiten Differenzbereichs erreicht ist, der bspw. um 10K unterhalb der Läufertemperatur liegen kann. In diesem genannten Beispiel wird also die Statorspannung von einem Normalwert und beginnend bei einer Differenztemperatur von 5K oberhalb der Läufertemperatur abgesenkt, besonders linear abgesenkt, bis zu einem Wert von bspw. 10K unterhalb der aktuellen Läufertemperatur. Damit wird etwa auch ein linearer Anstieg der Heizleistung erreicht.

Zu der Kühlsteuerung ist noch zu erwähnten, dass diese bspw. im Falle eines Innenläufers bisher bei einem absoluten Temperaturwert wie bspw. 80 Grad Celsius der Statornuttemperatur gestartet wurde und bei 100 Grad Celsius Nuttemperatur die maximale Kühlleistung erreicht hatte. Stattdessen wird für dieses Beispiel nun die Statorkühlung gestartet, wenn die Statornuttemperatur 20K über der Rotorpolschuhtemperatur liegt, also 20K über der Läufertemperatur.

Vorzugsweise wird für das Außenteil, also im Innenläuferfall für den Stator, eine Wasserkühlung mit einstellbarem Volumenstrom vorgesehen. Bspw. kann diese Wasserkühlung bei 20K Differenztemperatur mit geringem Volumenstrom begonnen werden, der bei 30K Differenztemperatur einen maximalen Volumenstrom erreicht. Vorzugsweise wird hier ein linearer Verlauf vorgeschlagen.

Sicherheitshalber kann zusätzlich eine Kühlung auch abhängig eines absoluten Wertes gestartet werden, wie bspw. einer Temperatur des Stators von 130 Grad Celsius. Dann kann, wenn die Kühlung nicht schon aufgrund der Differenztemperatur gestartet wurde, die Kühlung bei dem Wert gestartet werden und bis zu einem weiteren Wert von 140 Grad Celsius ihren Maximalwert erreichen. Damit wird sichergestellt, dass der Stator in jedem Fall gekühlt wird, wenn eine solche hohe Temperatur erreicht wird.

Es wird also erreicht, dass die thermische Ausdehnung des Außenteils, also im Innenläuferfall des Stators, möglichst immer größer als die Ausdehnung des Innenteils ist, im Falle des Innenläufers also des Läufers.

Weiterhin wird vorgeschlagen, die Parameter der Differenztemperaturregelung nicht fest vorzugeben, sondern erlernen zu lassen. Es wird vorgeschlagen, dass mit jedem Luftspaltereignis die zu errechnende Differenztemperatur erhöht wird, also die Temperatur, ab der eine Kühlung gestartet wird. Wenn es dann nicht mehr zu Luftspaltereignissen kommt, wird angenommen, dass der entsprechende Wert ausreichend ist. Ggf. können diese Werte dann wieder gesenkt werden. Als Luftspaltereignis ist ein Auslösen einer Sicherheitsmaßnahme zu verstehen, wenn die Luftspaltdicke zu klein geworden ist.

Besonders bei einem schallreduzierten Betrieb wird vorgeschlagen, einen eigenen Parametersatz zu erlernen, der sich vom leistungsoptimalen Betrieb, also im Grunde vom Normalbetrieb, unterscheidet. Dieser Vorschlag gilt besonders für einen fremderregten Synchrongenerator als Innenläufer. Bei diesem kann in einem schallreduzierten Betrieb die Windenergieanlage mit gleicher Leistung aber mit verringerter Drehzahl betrieben werden. Dazu benötigt der Rotor bzw. Läufer mehr Erregerleistung, es wird also ein größerer Erregerstrom an den Läufer bzw. Rotor gegeben, der dadurch heißer wird. Es besteht dann also eine größere Gefahr, dass sich der Läufer als Innenteil stärker ausdehnt als der Stator als Außenteil.

Im Detail kann so durchgeführt werden, dass zunächst eine werkseitige Initialeinstellung vorgenommen wird. Vorzugsweise sieht eine solche werkseitige Initialeinstellung vor, dass keine differenztemperaturabhängige Steuerung erfolgt.

Erfolgt dann das Auslösen einer Sicherheitsabschaltung aufgrund einer erkannten, zu geringen Luftspaltdicke, kann dann die vorgeschlagene Differenzregelung, also die Regelung besonders der Kühlung in Abhängigkeit der Differenztemperatur aktiviert werden. Bspw. kann ein Wert einer Überschreitungstemperatur auf 20K gesetzt werden. Es wird dann also als Anfangswert vorgesehen, dass eine Kühlung des Außenteils erst beginnt, wenn die Außenteiltemperatur um wenigstens 20K oberhalb der Innenteiltemperatur liegt.

Wenn dann nach einer vorbestimmten Rückstellzeit, die bspw. mehr als 3, 5 oder 10 Stunden betragen kann, kein Fehler aufgetreten ist, wird vorgeschlagen, diese Überschreitungstemperatur schrittweise zu verringern.

Tritt aber ein Abschalten erneut auf, kann vorgesehen sein, die Überschreitungstemperatur schrittweise wieder zu erhöhen und die Windenergieanlage wieder zu starten. Vorzugsweise fällt ein Erhöhungsschritt nach dem Auftreten eines Sicherheitsauslösens betragsmäßig größer aus als ein Reduzierungsschritt nach längerem störungsfreiem Betrieb. Bspw. kann ein Reduzierungsschritt 5K betragen, während ein Erhöhungsschritt 10K betragen kann.

Kommt es wiederholt zu Sicherheitsauslösungen durch einen erfassten zu niedrigen Luftspalt, kann ein Maximalwert für die Überschreitungstemperatur vorgesehen sein.

Es kann nun zwar immer noch vorkommen, dass die Windenergieanlage aufgrund einer beschriebenen Sicherheitsauslösung angehalten wird, sie kann aber selbsttätig wieder starten, besonders mit einem geänderten Wert der Überschreitungstemperatur.

**Patentansprüche**

1. Verfahren zum Steuern einer getriebelosen Windenergieanlage (100), wobei die Windenergieanlage (100) einen Generator (400) mit einem Stator (404) und einem Läufer (402) und dazwischen mit einem Luftspalt (410) mit einer Luftspaltdicke aufweist, wobei

   - der Generator (400) als Innenläufer ausgebildet ist, mit dem Stator (404) als Außenteil und dem Läufer (402) als Innenteil, oder
   - der Generator (400) als Außenläufer ausgebildet ist, mit dem Läufer als Außenteil und dem Stator als Innenteil, umfassend die Schritte:
   - Erfassen einer Temperatur des Außenteils als Außenteiltemperatur ($T_A$),
   - Erfassen einer Temperatur des Innenteils als Innenteiltemperatur ($T_I$),
   - Bilden einer Temperaturdifferenz als Differenz zwischen der Außenteiltemperatur und der Innenteiltemperatur,
   - Steuern des Generators (400) in Abhängigkeit der Temperaturdifferenz so, dass einer Verringerung der Luftspaltdicke (410) durch thermische Ausdehnung des Generators (400) entgegengewirkt wird, **gekennzeichnet dadurch, dass**
   - die Luftspaltdicke überwacht wird und bei Unterschreiten einer vorgebbaren Mindestdicke eine Sicherheitsabschaltung ausgeführt wird, um eine Berührung zwischen Außenteil und Innenteil zu verhindern, und
   - eine Überschreitungstemperatur, die einen Temperaturwert angibt, um den die Außenteiltemperatur oberhalb der Innenteiltemperatur liegen soll, bei jedem Auslösen der Sicherheitsabschaltung erhöht wird, wobei
   - die Überschreitungstemperatur schrittweise wieder reduziert wird, wenn innerhalb eines Prüfzeitraums die Sicherheitsabschaltung nicht ausgelöst wurde.

2. Verfahren nach Anspruch 1,
   **dadurch gekennzeichnet, dass**
   das Außenteil in Abhängigkeit der Temperaturdifferenz so gekühlt oder beheizt wird, dass der Verringerung der Luftspaltdicke entgegengewirkt wird.

3. Verfahren nach Anspruch 1 oder 2,
   **dadurch gekennzeichnet, dass**
   das Außenteil so gekühlt oder beheizt wird,

   - dass die Außenteiltemperatur höchstens um eine Unterschreitungstemperatur unterhalb der Innenteiltemperatur liegt,
   - dass die Außenteiltemperatur wenigstens so hoch ist wie die Innenteiltemperatur, oder

   - dass die Außenteiltemperatur wenigstens um eine Überschreitungstemperatur oberhalb der Innenteiltemperatur liegt.

4. Verfahren nach einem der vorstehenden Ansprüche,
   **dadurch gekennzeichnet, dass**
   das Außenteil in Abhängigkeit der Temperaturdifferenz elektrisch beheizt wird und/oder das Innenteil elektrisch entlastet wird, wobei insbesondere

   - in dem Fall, dass der Generator als Innenläufer ausgebildet ist, eine Statorspannung reduziert wird, um einen Statorstrom zu erhöhen, um den Stator durch erhöhte ohmsche Verluste im Stator zu erwärmen, oder
   - in dem Fall, dass der Generator als Außenläufer ausgebildet ist, eine Statorspannung erhöht wird, um den Statorstrom zu reduzieren, um den Stator durch die verringerten Verluste im Stator weniger zu erwärmen.

5. Verfahren nach einem der vorstehenden Ansprüche,
   **dadurch gekennzeichnet, dass**
   zur Kühlung des Außenteils die Temperaturdifferenz und die Außenteiltemperatur überwacht werden und die Kühlung des Außenteils gestartet wird, wenn

   - die Außenteiltemperatur wenigstens um eine bzw. die Überschreitungstemperatur oberhalb der Innenteiltemperatur liegt und/oder
   - die Außenteiltemperatur oberhalb einer ersten Grenztemperatur liegt,

   wobei vorzugsweise die Kühlung des Außenteils eine variable Kühlstärke aufweist und in ihrer Kühlstärke mit weiter ansteigender Außenteiltemperatur erhöht wird, insbesondere linear mit weiter ansteigenden Außenteiltemperatur von einer Anfangskühlstärke bis zu einer Maximalkühlstärke.

6. Verfahren nach einem der vorstehenden Ansprüche,
   **dadurch gekennzeichnet, dass**

   - eine Beheizung des Außenteils vorgenommen wird, sobald die Außenteiltemperatur um weniger als eine Mindestdifferenztemperatur oberhalb der Innenteiltemperatur liegt, wobei vorzugsweise die Mindestdifferenztemperatur kleiner als die Überschreitungstemperatur gewählt wird, z.B. halb so groß, wobei vorzugsweise
   - die Beheizung eine variable Heizleistung aufweist und in ihrer Heizleistung mit weiter in Bezug auf die Innenteiltemperatur abfallender Außenteiltemperatur erhöht wird, insbesondere linear mit in Bezug auf die Innenteiltemperatur weiter abfallender Außenteiltemperatur von einer Anfangsheizleistung bis zu einer Maximalheizleistung.

**7.** Verfahren nach einem der vorstehenden Ansprüche, **dadurch gekennzeichnet, dass**

- zwischen einem Normalbetrieb und einem reduzierten Betrieb der Windenergieanlage unterschieden wird, und
- im reduzierten Betrieb die Windenergieanlage gegenüber dem Normalbetrieb bei gleichen Windbedingungen mit einer reduzierten Drehzahl betrieben wird und
- das Verfahren zum Kühlen des Generators im Normalbetrieb andere Parameterwerte verwendet, als im reduzierten Betrieb, insbesondere für die Überschreitungstemperatur und/oder für die erste Grenztemperatur.

**8.** Verfahren nach einem der vorstehenden Ansprüche, **dadurch gekennzeichnet, dass**

- für das Innenteil und das Außenteil unterschiedliche Kühlmedien und/oder Kühlungsarten vorgesehen sind, insbesondere dass
- das Innenteil mit einer Luftkühlung und/oder einer passiven Kühlung versehen ist und/oder
- das Außenteil mit einer Wasserkühlung versehen ist.

**9.** Getriebelose Windenergieanlage (100) mit einem Generator (400) mit einem Stator (404) und einem Läufer (402) und dazwischen mit einem Luftspalt (410) mit einer Luftspaltdicke, wobei

- der Generator als Innenläufer ausgebildet ist, mit dem Stator als Außenteil und dem Läufer als Innenteil, oder
- der Generator als Außenläufer ausgebildet ist, mit dem Läufer als Außenteil und dem Stator als Innenteil, umfassend
- ein Außenteiltemperaturmessmittel zum Erfassen einer Temperatur des Außenteils als Außenteiltemperatur,
- ein Innenteiltemperaturmessmittel zum Erfassen einer Temperatur des Innenteils als Innenteiltemperatur,
- ein Differenzmittel zum Bilden einer Temperaturdifferenz als Differenz zwischen der Außenteiltemperatur und der Innenteiltemperatur, und
- ein Steuerungsmittel, vorbereitet zum Steuern des Generators in Abhängigkeit der Temperaturdifferenz so, dass einer Verringerung der Luftspaltdicke durch thermische Ausdehnung des Generators entgegengewirkt wird, **dadurch gekennzeichnet, dass** das Steuerungsmittel die Luftspaltdicke überwacht und bei Unterschreiten einer vorgebbaren Mindestdicke eine Sicherheitsabschaltung ausgeführt wird, um eine Berührung zwischen Außenteil und Innenteil zu verhindern, wobei das Steuerungsmittel so eingerichtet ist, dass eine Überschreitungstemperatur, die einen Temperaturwert angibt, um den die Außenteiltemperatur oberhalb der Innenteiltemperatur liegen soll, adaptiv angepasst wird, wobei
- die Überschreitungstemperatur bei jedem Auslösen der Sicherheitsabschaltung erhöht wird, wobei
- die Überschreitungstemperatur schrittweise wieder reduziert wird, wenn innerhalb eines Prüfzeitraums die Sicherheitsabschaltung nicht ausgelöst wurde.

**10.** Getriebelose Windenergieanlage nach Anspruch 9, **dadurch gekennzeichnet, dass**

- eine Innenkühlvorrichtung zum Kühlen des Innenteils vorgesehen ist, und/oder
- eine Außenkühlvorrichtung zum Kühlen des Außenteils vorgesehen ist, wobei vorzugsweise
- für die Innenkühlvorrichtung und die Außenkühlvorrichtung unterschiedliche Kühlmedien und/oder Kühlungsarten vorgesehen sind, insbesondere dass
- die Innenkühlvorrichtung als Luftkühlung und/oder passive Kühlung ausgebildet ist und/oder
- die Außenkühlvorrichtung als Wasserkühlung ausgebildet ist.

**11.** Getriebelose Windenergieanlage nach Anspruch 9 oder 10,
**dadurch gekennzeichnet, dass**
sie dazu eingerichtet ist, ein Verfahren nach einem der Ansprüche 1 bis 8 durchzuführen.

**Claims**

**1.** A method for controlling a gearless wind turbine (100), the wind turbine (100) having a generator (400) with a stator (404) and a generator rotor (402) and in between an air gap (410) with an air gap thickness, wherein

- the generator (400) is designed as an internal rotor, with the stator (404) as the outer part and the generator rotor (402) as the inner part, or
- the generator (400) is designed as an external rotor, with the generator rotor as the outer part and the stator as the inner part, comprising the steps of:
- detecting a temperature of the outer part as an outer part temperature ($T_A$),
- detecting a temperature of the inner part as an inner part temperature ($T_I$),
- forming a temperature difference as the difference between the outer part temperature and the inner part temperature,
- controlling the generator (400) in dependence on the temperature difference in such a way that a reduction in the air gap thickness (410) due to thermal expansion of the generator (400) is counteracted, **characterized in that**
- the air gap thickness is monitored and, when a specifiable minimum thickness is undershot, a safety shutdown is initiated, in order to prevent contact between the outer part and the inner part, and
- every time the safety shutdown is initiated, a overshooting temperature, which indicates a temperature value by which the outer part temperature is intended to lie above the inner part temperature, is increased, wherein
- the overshooting temperature is reduced again step by step if the safety shutdown has not been initiated within a testing time period.

2. The method as claimed in claim 1,
   **characterized in that**
   the outer part is cooled or heated in dependence on the temperature difference in such a way that the reduction in the air gap thickness is counteracted.

3. The method as claimed in claim 1 or 2,
   **characterized in that**
   the outer part is cooled or heated in such a way that

   - the outer part temperature lies below the inner part temperature at most by an undershooting temperature,
   - the outer part temperature is at least as high as the inner part temperature, or
   - the outer part temperature lies above the inner part temperature at least by an overshooting temperature.

4. The method as claimed in one of the preceding claims,
   **characterized in that**
   the outer part is electrically heated and/or the inner part is electrically relieved in dependence on the temperature difference, wherein in particular

   - in the case where the generator is designed as an internal rotor, a stator voltage is reduced in order to increase a stator current, in order to warm the stator by increased ohmic losses in the stator, or
   - in the case where the generator is designed as an external rotor, a stator voltage is increased in order to reduce the stator current, in order to warm the stator less by the reduced losses in the stator.

5. The method as claimed in one of the preceding claims,
   **characterized in that**
   for cooling the outer part, the temperature difference and the outer part temperature are monitored and the cooling of the outer part is started if

   - the outer part temperature lies above the inner part temperature at least by a or the overshooting temperature and/or
   - the outer part temperature lies above a first limit temperature,

   wherein preferably the cooling of the outer part has a variable cooling intensity and is increased in its cooling intensity as the outer part temperature increases further,
   in particular linearly as the outer part temperature increases further, from an initial cooling intensity to a maximum cooling intensity.

6. The method as claimed in one of the preceding claims,
   **characterized in that**

   - a heating of the outer part is performed as soon as the outer part temperature lies above the inner part temperature by less than a minimum differential temperature, the minimum differential temperature preferably being chosen to be less than the overshooting temperature, for example half, wherein preferably
   - the heating has a variable heating output and is increased in its heating output as the outer part temperature falls further in relation to the inner part temperature, in particular linearly as the outer part temperature falls further in relation to the inner part temperature, from an initial heating output to a maximum heating output.

7. The method as claimed in one of the preceding claims,
   **characterized in that**

   - a distinction is made between normal operation and reduced operation of the wind turbine, and
   - in reduced operation, the wind turbine is operated with a reduced rotational speed as compared with normal operation, under the same wind conditions, and
   - the method for cooling the generator uses different parameter values in normal operation than in reduced operation, in particular for the overshooting temperature and/or for the first limit temperature.

8. The method as claimed in one of the preceding claims,
   **characterized in that**

- different cooling media and/or types of cooling are provided for the inner part and the outer part, in particular **in that**
- the inner part is provided with an air cooling and/or a passive cooling and/or
- the outer part is provided with a water cooling.

9. A gearless wind turbine (100) having a generator (400) with a stator (404) and a generator rotor (402) and in between an air gap (410) with an air gap thickness, wherein

- the generator is designed as an internal rotor, with the stator as the outer part and the generator rotor as the inner part, or
- the generator is designed as an external rotor, with the generator rotor as the outer part and the stator as the inner part, comprising
- an outer part temperature measuring means for detecting a temperature of the outer part as an outer part temperature,
- an inner part temperature measuring means for detecting a temperature of the inner part as an inner part temperature,
- a difference means for forming a temperature difference as the difference between the outer part temperature and the inner part temperature, and
- a control means, prepared for controlling the generator in dependence on the temperature difference so as to counteract a reduction in the air gap thickness due to thermal expansion of the generator, **characterized in that** the control means monitors the air gap thickness and, when a specifiable minimum thickness is undershot, a safety shutdown is initiated, in order to prevent contact between the outer part and the inner part, wherein
the control means is designed so that an overshooting temperature, which indicates a temperature value by which the outer part temperature is intended to lie above the inner part temperature, is adaptively adjusted, wherein
- every time the safety shutdown is initiated, the overshooting temperature is increased, wherein
- the overshooting temperature is reduced again step by step if the safety shutdown has not been initiated within a testing time period.

10. The gearless wind turbine as claimed in claim 9, **characterized in that**

- an inner cooling device for cooling the inner part is provided, and or
- an outer cooling device for cooling the outer part is provided, wherein preferably
- different cooling media and/or types of cooling are provided for the inner cooling device and the outer cooling device, in particular **in that**
- the inner cooling device is designed as air cooling and/or passive cooling and/or
- the outer cooling device is designed as water cooling.

11. The gearless wind turbine as claimed in claim 9 or 10, c
haracterized in that
it is designed for carrying out a method as claimed in one of claims 1 to 8.

**Revendications**

1. Procédé pour commander une éolienne (100) sans transmission, dans lequel l'éolienne (100) présente un générateur (400) avec un stator (404) et un induit (402) et, de manière intercalée, avec un entrefer (410) avec une épaisseur d'entrefer, dans lequel

- le générateur (400) est réalisé en tant qu'un induit intérieur, avec le stator (404) en tant que partie extérieure et l'induit (402) en tant que partie intérieure, ou
- le générateur (400) est réalisé en tant qu'induit extérieur, avec l'induit en tant que partie extérieure et le stator en tant que partie intérieure, comprenant les étapes :
- de détection d'une température de la partie extérieure en tant que température de partie extérieure ($T_A$) ;
- de détection d'une température de la partie intérieure en tant que température de partie intérieure ($T_I$),
- d'obtention d'une différence de température en tant que différence entre la température de partie extérieure et la température de partie intérieure,
- de commande du générateur (400) en fonction de la différence de température de sorte qu'une diminution de l'épaisseur d'entrefer (410) est contrecarrée par une dilatation thermique du générateur (400), **caractérisé en ce que**
- l'épaisseur d'entrefer est surveillée et, en cas de non-dépassement d'une épaisseur minimale pouvant être spécifiée, une désactivation de la sécurité est exécutée pour empêcher un contact entre la partie extérieure et la partie intérieure, et
- une température de dépassement, qui indique une valeur de température de laquelle la température de partie extérieure est censée être supérieure à la température de partie intérieure, est augmentée à chaque déclenchement de la désactivation de sécurité, dans lequel
- la température de dépassement est à nouveau progressivement réduite quand la désactivation de sécurité n'a pas été déclenchée dans les délais d'une période de vérification.

**2.** Procédé selon la revendication 1,
**caractérisé en ce que**
la partie extérieure est refroidie ou chauffée en fonction de la différence de température de telle sorte que la diminution de l'épaisseur d'entrefer est contrecarrée.

**3.** Procédé selon la revendication 1 ou 2,
**caractérisé en ce que**
la partie extérieure est refroidie ou chauffée de telle sorte

- que la température de partie extérieure est inférieure au maximum d'une température de non-dépassement à la température de partie intérieure,
- que la température de partie extérieure est au moins aussi élevée que la température de partie intérieure, ou
- que la température de partie extérieure est supérieure d'au moins une température de dépassement à la température de partie intérieure.

**4.** Procédé selon l'une quelconque des revendications précédentes,
**caractérisé en ce que**
la partie extérieure est chauffée électriquement en fonction de la différence de température et/ou la partie intérieure est déchargée électriquement, dans lequel en particulier,

- si le générateur est réalisé en tant qu'un induit intérieur, une tension statorique est réduite pour augmenter un courant statorique pour réchauffer le stator par des pertes ohmiques augmentées dans le stator, ou
- si le générateur est réalisé en tant qu'un induit extérieur, une tension statorique est augmentée pour réduire le courant statorique pour moins réchauffer le stator par les pertes réduites dans le stator.

**5.** Procédé selon l'une quelconque des revendications précédentes,
**caractérisé en ce que**
pour refroidir la partie extérieure, la différence de température et la température de partie extérieure sont surveillées et le refroidissement de la partie extérieure est débuté, quand

- la température de partie extérieure est supérieure d'une ou de la température de dépassement à la température de partie intérieure et/ou
- la température de partie extérieure est supérieure à une première température limite,

dans lequel de préférence le refroidissement de la partie extérieure présente une intensité de refroidissement variable et son intensité de refroidissement est augmentée au fur et à mesure que la température de partie extérieure continue à croître, en particulier de manière linéaire au fur et à mesure que la température de partie extérieure continue à croître depuis une intensité de refroidissement de départ vers une intensité de refroidissement maximale.

**6.** Procédé selon l'une quelconque des revendications précédentes,
**caractérisé en ce que**

- un chauffage de la partie extérieure est réalisé dès que la température de partie extérieure est supérieure d'une valeur inférieure à une température de différence minimale à la température de partie intérieure, dans lequel de préférence la température de différence minimale est choisie comme inférieure à la température de dépassement, par exemple de moitié, dans lequel de préférence
- le chauffage présente une puissance de chauffage variable et sa puissance de chauffage est augmentée au fur et à mesure que la température de partie extérieure continue à baisser par rapport à la température de partie intérieure, en particulier de manière linéaire au fur et à mesure que la température de partie extérieure continue à baisser par rapport à la température de partie intérieure depuis une puissance de chauffage de départ jusqu'à une puissance de chauffage maximale.

**7.** Procédé selon l'une quelconque des revendications précédentes,
**caractérisé en ce que**

- distinction est faite entre un fonctionnement normal et un fonctionnement réduit de l'éolienne, et
- l'éolienne fonctionne dans le fonctionnement réduit, par rapport au fonctionnement normal, à des conditions de vent identiques avec une vitesse de rotation réduite, et
- le procédé de refroidissement du générateur utilise dans le fonctionnement normal des valeurs de paramètre autres que dans le fonctionnement réduit, en particulier pour la température de dépassement et/ou pour la première température limite.

**8.** Procédé selon l'une quelconque des revendications précédentes,
**caractérisé en ce que**

- différents fluides de refroidissement et/ou types de refroidissement sont prévus pour la partie intérieure et la partie extérieure, en particulier que

- la partie intérieure est pourvue d'un refroidissement à air et/ou d'un refroidissement passif, et/ou
- la partie extérieure est pourvue d'un refroidissement à eau.

**9.** Eolienne (100) sans transmission avec un générateur (400) avec un stator (404) et un induit (402) et, de manière intercalée, avec un entrefer (410) avec une épaisseur d'entrefer, dans laquelle

- le générateur est réalisé en tant qu'induit intérieur, avec le stator en tant que partie extérieure et l'induit en tant que partie intérieure, ou
- le générateur est réalisé en tant qu'induit extérieur, avec l'induit en tant que partie extérieure et le stator en tant que partie intérieure, comprenant
- un moyen de mesure de température de partie extérieure pour détecter une température de la partie extérieure en tant que température de partie extérieure,
- un moyen de mesure de température de partie intérieure pour détecter une température de la partie intérieure en tant que température de partie intérieure,
- un moyen de différence pour obtenir une différence de température en tant que différence entre la température de partie extérieure et la température de partie intérieure, et
- un moyen de commande, préparé pour commander le générateur en fonction de la différence de température de sorte qu'une diminution de l'épaisseur d'entrefer est contrecarrée par une dilatation thermique du générateur, **caractérisée en ce que** le moyen de commande surveille l'épaisseur d'entrefer et une désactivation de sécurité est exécutée en cas de non-dépassement d'une épaisseur minimale pouvant être spécifiée pour empêcher un contact entre la partie extérieure et la partie intérieure, dans laquelle

le moyen de commande est mis au point de telle sorte qu'une température de dépassement, qui indique une valeur de température de laquelle la température de partie extérieure est censée être supérieure à la température de partie intérieure, est adaptée de manière adaptative, dans laquelle

- la température de dépassement est augmentée à chaque déclenchement de la désactivation de sécurité, dans laquelle
- la température de dépassement est à nouveau progressivement réduite quand la désactivation de sécurité n'a pas été déclenchée dans un délai de la période de vérification.

**10.** Eolienne sans transmission selon la revendication 9, **caractérisée en ce que**

- un dispositif de refroidissement intérieur est prévu pour refroidir la partie intérieure, et/ou
- un dispositif de refroidissement extérieur est prévu pour refroidir la partie extérieure, dans laquelle de préférence
- pour le dispositif de refroidissement intérieur et le dispositif de refroidissement extérieur, différents fluides de refroidissement et/ou types de refroidissement sont prévus, en particulier que
- le dispositif de refroidissement intérieur est réalisé en tant que refroidissement à air et/ou que refroidissement passif et/ou
- le dispositif de refroidissement extérieur est réalisé en tant que refroidissement à eau.

**11.** Eolienne sans transmission selon la revendication 9 ou 10, **caractérisée en ce que** elle est mise au point pour mettre en œuvre un procédé selon l'une quelconque des revendications 1 à 8.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2852037 A
- DE 102014208791A1 PCT

- US 20140054897 A1